# EUROPEAN PATENT APPLICATION

(11) **EP 4 647 907 A1**
(43) Date of publication of application: **12.11.2025**
(21) Application number: 25174008.0
(22) Date of filing: 02.05.2025
(51) Int. Cl.: G06F 9/455, G06F 11/20

(54) **FAILOVER MIGRATION FOR VIRTUAL NETWORK INTERFACE CONTROLLERS BETWEEN DATA PROCESSING UNITS**

(30) Priority: 09.05.2024 US 202418660185
(71) Applicant: VMware LLC, Palo Alto, CA 94304 (US)
(72) Inventor: Doshi, Ronak, San Jose, CA, 95134 (US); Ang, Boon Seong, Saratoga, CA, 95070 (US); Jiang, Wenyi, Palo Alto, CA, 94306 (US); Yang, Guolin, San Jose, CA, 95120 (US)
(74) Representative: Grünecker Patent- und Rechtsanwälte PartG mbB

(57) **Abstract**

A method of migrating states of virtual network interface controllers (vNICs) of virtual computing instances between data processing units (DPUs), includes the steps of: in response to detecting a failure in a first DPU, transmitting a request to the first DPU for a state of a first vNIC of a first virtual computing instance, wherein the state of the first vNIC includes memory locations at which network packets of the first vNIC are to be stored by one of the first vNIC and a first virtual function (VF) of the first DPU for further processing by the other; and transmitting the state of the first vNIC, received from the first DPU in response to the request, to a second DPU, and instructing a second VF of the second DPU to store and process network packets of the first vNIC based on the state of the first vNIC.

## Description

### Background

The growth of certain fields such as cloud computing has dramatically increased processing needs for many organizations. For example, tenants of data centers rely on servers to perform increasing numbers of networking and storage operations. Accordingly, there is a growing trend for servers to include data processing units (DPUs), which are programmable processors designed to efficiently process and transfer large amounts of data. For example, modern servers often use smart network interface controllers (SmartNICs), which include DPUs that perform networking operations in place of central processing units (CPUs). Moreover, modem servers often include a plurality of DPUs. For example, to provide redundancy, a modem server may include a "dual DPU," wherein a first "active" DPU performs operations by default, and a second "standby" DPU performs operations in the event of the first DPU failing.

To connect to and participate in networks, virtual computing instances such as virtual machines (VMs) use virtual network interface controllers (vNICs), which are adapters implemented in software that provide interfaces to networks. VNICs may be implemented partially in VMs and partially in a virtualization software, also referred to as a hypervisor. On servers with DPUs, there may be various modes for vNICs, and the modes determine data paths for network traffic between the vNICs and the DPUs. When a vNIC is in a first mode, referred to herein as "emulation mode," the data path between the vNIC and a DPU passes through the hypervisor. When a vNIC is in a second mode, referred to herein as "pass-through mode," the data path does not pass through the hypervisor. Instead, the portion of the vNIC implemented in a VM may communicate directly with a DPU by storing network packets in shared memory.

As used herein, a network packet is a group of bits that may be transported together, and which may be packaged in another form such as a frame, message, or segment. To process network packets together, the vNIC and DPU each maintain state information, such state information being a collection of data and/or metadata identifying how to process network packets, e.g., identifying memory locations for a vNIC or DPU to store or retrieve network packets or identifying interrupts to be raised to alert vNICs to retrieve network packets from memory. Such state information is stored by the vNIC and DPU, e.g., to facilitate direct communication therebetween.

Pass-through mode reduces the latency of the data paths for vNICs, allowing outgoing traffic from the vNICs to more quickly reach the DPUs and allowing incoming traffic from the DPUs to more quickly reach the vNICs. However, pass-through mode is problematic for servers with multiple DPUs. If an active DPU fails, a standby DPU may be activated to perform operations for any vNICs that were communicating with the failed DPU. However, any vNICs that are in pass-through mode are not synchronized with the new DPU, and are thus no longer functional because they cannot resume communications with the new DPU. A mechanism is needed for enabling redundancy of DPUs for vNICs utilizing pass-through mode.

### Summary

One or more embodiments provide a method of migrating states of vNICs of virtual computing instances between DPUs. The method includes the steps of: in response to detecting a failure in a first DPU, transmitting a request to the first DPU for a state of a first vNIC of a first virtual computing instance, wherein the state of the first vNIC includes memory locations at which network packets of the first vNIC are to be stored by one of the first vNIC and a first virtual function (VF) of the first DPU for further processing by the other; and transmitting the state of the first vNIC, received from the first DPU in response to the request for the state of the first vNIC, to a second DPU, and instructing a second VF of the second DPU to store and process network packets of the first vNIC based on the state of the first vNIC transmitted to the second DPU.

Further embodiments include a non-transitory computer-readable storage medium comprising instructions that cause a computer system to carry out the above method, as well as a computer system configured to carry out the above method.

### Brief Description of the Drawings

Figure 1 is a block diagram of a virtualized computer system in which embodiments may be implemented.
Figure 2A is a block diagram illustrating an example of a data path between a vNIC and a DPU on a host computer of the virtualized computer system when the vNIC is in emulation mode.
Figure 2B is a block diagram illustrating an example of a data path between a vNIC and a DPU on a host computer of the virtualized computer system when the vNIC is in pass-through mode.
Figure 3 is a block diagram of an example configuration of a virtual switch of a host of the virtualized computer system.
Figure 4 is a flow diagram of a method performed by a hypervisor and a plurality of DPUs to handle a failure of a DPU when the hypervisor is able to acquire states of vNICs that are in pass-through mode from the failed DPU, according to some embodiments.
Figure 5 is a flow diagram of a method performed by the hypervisor, a VM, and a newly activated DPU to handle a failure of a DPU when the hypervisor is unable to acquire states of vNICs that are in pass-through mode from the failed DPU, according to some embodiments.
Figure 6 is a flow diagram of an example of a method performed by the hypervisor after a failure of a DPU, to assign virtual functions of a new DPU to vNICs, according to some embodiments.

### Detailed Description

Techniques are described for enabling redundancy for DPUs when vNICs utilize pass-through mode. The description herein focuses on two situations, depending on how a DPU fails. The first situation is one in which a DPU fails in a manner that still allows the DPU to communicate with a hypervisor of a host computer, referred to herein simply as a "host." The second situation is one in which the DPU fails such that the DPU is unable to communicate.

In the first situation, when the DPU fails, the hypervisor acquires from virtual functions (VFs) of the failed DPU, state information used by the VFs of the failed DPU for communicating with vNICs. A VF of a DPU is an instance of that DPU implemented in software, and each DPU may include a plurality of VFs each configured to control the DPU to perform processing for a corresponding vNIC. After the hypervisor acquires the state information, upon a new DPU being activated, the hypervisor transmits the state information to VFs of the new DPU. The VFs of the new DPU are then able to communicate with the vNICs without any disruption in performing networking operations.

In the second situation, when the DPU fails, the hypervisor instructs VMs to reset state information stored by the VMs. Then, upon a new DPU being activated, the hypervisor transmits the reset state information to VFs of the new DPU. The VFs of the new DPU are then able to communicate with the vNICs. These and further aspects of the invention are discussed below with respect to the drawings.

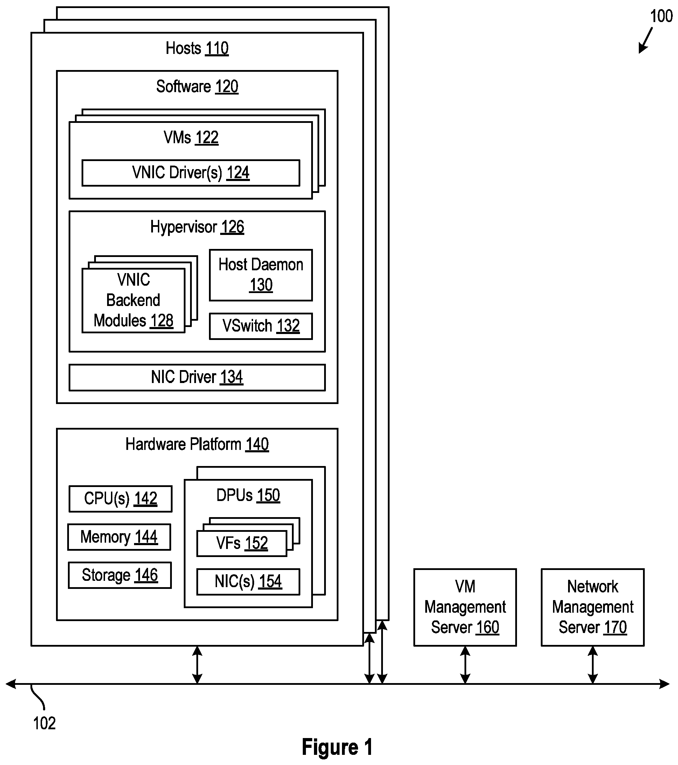

Figure 1 is a block diagram of a virtualized computer system 100 in which embodiments may be implemented. Virtualized computer system 100 includes a cluster of hosts 110, a VM management server 160, and a network management server 170. Each of hosts 110 is constructed on a hardware platform 140 such as an x86 architecture platform. Hardware platform 140 includes conventional components of a computing device, such as one or more CPUs 142, memory 144 such as random-access memory (RAM), and local storage 146 such as one or more magnetic drives or solid-state drives (SSDs). CPU(s) 142 are configured to execute instructions such as executable instructions that perform one or more operations described herein, which may be stored in memory 144. Local storage 146 of hosts 110 may optionally be aggregated and provisioned as a virtual storage area network (vSAN).

Hardware platform 140 further includes a plurality of DPUs 150. Each of DPUs 150 includes a plurality of VFs 152 and one or more network interface controllers (NICs) 154. VFs 152 are virtual (software) execution instances of DPUs 150 for vNICs that are in pass-through mode. Each of VFs 152 is assigned to a single one of such vNICs and stores state information of the assigned vNIC and performs the DPU processing for the assigned vNIC. NICs 154 enable hosts 110 to communicate with each other and with other devices over a network 102 such as a local area network (LAN).

Hardware platform 140 of each of hosts 110 supports software 120. Software 120 includes a hypervisor 126, which is a software layer or component that supports the execution of multiple virtualized computing instances such as VMs 122. A virtual computing instance is an addressable data compute node (DCN) or isolated user space instance, such as a VM or container. Hypervisor 126 communicates with DPUs 150, e.g., via a NIC driver 134. One example of hypervisor 126 is a VMware ESX^{®} hypervisor, available from VMware LLC.

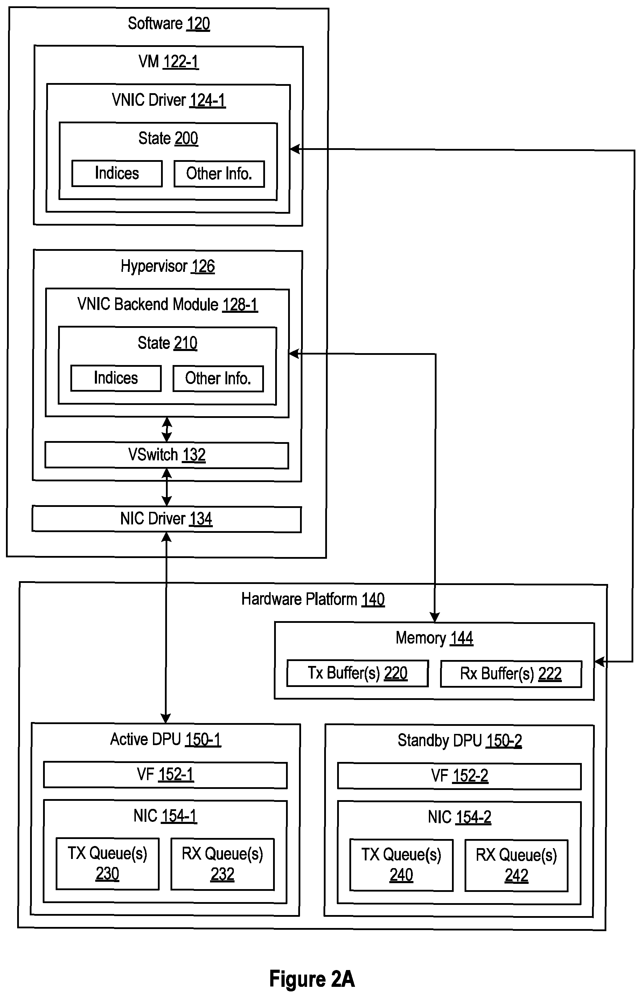

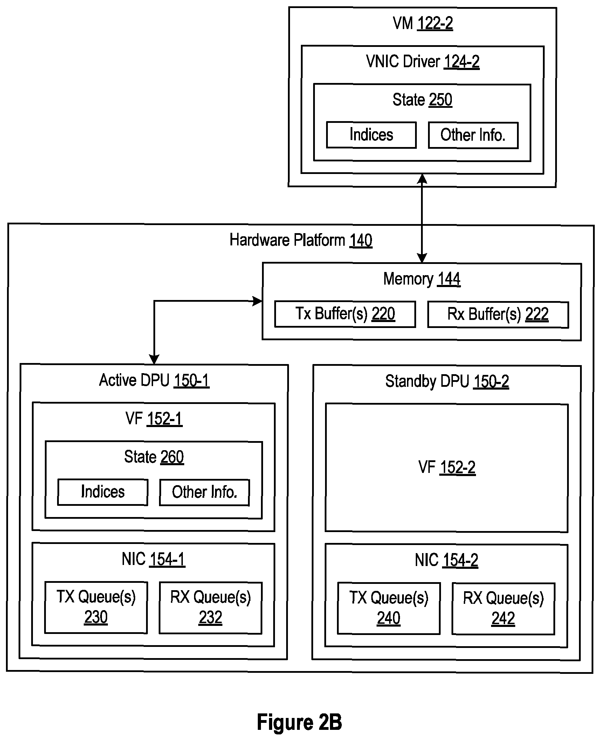

Each of VMs 122 uses one or more vNICs for communicating with other VMs. In the example of virtualized computer system 100, each vNIC is implemented partially in one of VMs 122 as a vNIC driver 124 and partially in hypervisor 126 as a vNIC backend module 128. For a vNIC in emulation mode, vNIC driver 124 communicates with one of DPUs 150 via hypervisor 126, as discussed below in conjunction with Figure 2A. For a vNIC that is in pass-through mode, vNIC driver 124 communicates directly with one of DPUs 150 without hypervisor 126, as discussed below in conjunction with Figure 2B. Although the disclosure is described with reference to VMs, the teachings herein also apply to other types of virtual computing instances such as containers, with vNICs running in pass-through mode.

In the example of virtualized computer system 100, in addition to vNIC backend modules 128 of vNICs, hypervisor 126 includes a host daemon 130 and a virtual switch (vSwitch) 132. Host daemon 130 may orchestrate various processes described herein for handling a failure of one of DPUs 150. VSwitch 132 is software that establishes connections between virtual and physical networks for vNICs that are in emulation mode. Furthermore, for vNICs that are in pass-through mode, vSwitch 132 may manage the assignment of VFs 152 to the vNICs. Each of the vNICs is assigned a port on vSwitch 132.

In the example of virtualized computer system 100, VM management server 160 logically groups hosts 110 into a cluster to perform cluster-level tasks such as provisioning and managing VMs 122 and migrating VMs 122 from one of hosts 110 to another. VM management server 160 may communicate with hosts 110 via a management network (not shown) provisioned from network 102. VM management server 160 may be, e.g., a physical server or one of VMs 122. One example of VM management server 160 is VMware vCenter Server,^{®} available from VMware LLC.

In the example of virtualized computer system 100, network management server 170 manages software-defined networks (SDNs) across network 102. DPUs 150 perform networking operations for VMs 122 to communicate with each other across such SDNs, which may include communication between VMs 122 executing on the same one of hosts 110 and communications between VMs 122 executing on different ones of hosts 110. Network management server 170 may be, e.g., a physical server or one of VMs 122. One example of network management server 170 is VMware NSX,^{®} available from VMware LLC.

Figure 2A is a block diagram illustrating an example of a data path between a vNIC and a DPU 150-1 on one of hosts 110 when the vNIC is in emulation mode. Figure 2A illustrates two DPUs: active DPU 150-1 and a standby DPU 150-2. Active DPU 150-1 and standby DPU 150-2 include VFs 152-1 and 152-2, respectively, and NICs 154-1 and 154-2, respectively. In practice, active DPU 150-1 and standby DPU 150-2 each includes several VFs and may each include more than one NIC. However, only one VF and one NIC are illustrated in each for simplicity.

NICs 154-1 and 154-2 include one or more transmit (TX) queues 230 and one or more TX queues 240, respectively, for transmitting traffic to another one of hosts 110. NICs 154-1 and 154-2 also include one or more receive (RX) queues 232 and one or more RX queues 242, respectively, for receiving traffic from another one of hosts 110. In the illustrated example, memory 144 includes one or more TX buffers 220 and one or more RX buffers 222. While active DPU 150-1 is active, TX buffer(s) 220 correspond to TX queue(s) 230, and RX buffer(s) 222 correspond to RX queue(s) 232. If active DPU 150-1 fails and standby DPU 150-2 is activated, TX buffer(s) 220 then correspond to TX queue(s) 240, and RX buffer(s) 222 then correspond to RX queue(s) 242.

In software 120, a VM 122-1 uses a vNIC, the vNIC being implemented in the illustrated example, in VM 122-1 as a vNIC driver 124-1 and in hypervisor 126 as a vNIC backend module 128-1. VNIC driver 124-1 and vNIC backend module 128-1 include state information 200 and 210, respectively. Each of state 200 and 210 may include indices and other state information. The indices are memory locations in TX buffer(s) 220 and RX buffer(s) 222 at which to store and retrieve network packets. The other information may include, e.g., information about any pending interrupts to be raised with respect to the processing of network packets of the vNIC and information about any errors encountered in the processing of network packets of the vNIC.

In the illustrated example, for the vNIC to transmit a packet from VM 122-1, vNIC driver 124-1 stores the packet in TX buffer(s) 220 and updates a peripheral component interconnect express (PCIe) base address register (BAR) of memory 144 to alert vNIC backend module 128-1. VNIC backend module 128-1 retrieves the packet from TX buffer(s) 220. Specifically, the packet is stored and retrieved at an index of TX buffer(s) 220 known by each of vNIC driver 124-1 and vNIC backend module 128-1 based on the indices of states 200 and 210, respectively. VNIC backend module 128-1 transmits the packet to VF 152-1 via its respective port of vSwitch 132 and NIC driver 134. Active DPU 150-1 then performs any required processing on the packet and transmits the packet to its destination, which may be, e.g., another VM on the same one of hosts 110 or one of VMs 122 on another one of hosts 110.

In the illustrated example, for the vNIC to receive a packet, VF 152-1 transmits the packet to vNIC backend module 128-1 via NIC driver 134 and the respective port of vSwitch 132. VNIC backend module 128-1 then stores the packet in RX buffer(s) 222 and raises an interrupt to vNIC driver 124-1. VNIC driver 124-1 then retrieves the packet from RX buffer(s) 222 for further processing thereby. Specifically, the packet is stored and retrieved at an index of RX buffer(s) 222 known by each of vNIC driver 124-1 and vNIC backend module 128-1 based on the indices of states 200 and 210, respectively.

Figure 2B is a block diagram illustrating an example of a data path between a vNIC and DPU 150-1 on one of hosts 110 when the vNIC is in pass-through mode. In software 120, a VM 122-2 uses a vNIC, the vNIC being implemented in the illustrated example, in VM 122-2 as a vNIC driver 124-2 and in hypervisor 126 as one of vNIC backend modules 128 (not shown in Figure 2B). Similarly to vNIC driver 124-1 of Figure 2A, vNIC driver 124-2 includes state information 250, including, e.g., indices and other state information. However, instead of the corresponding one of vNIC backend modules 128 storing corresponding state information for the vNIC, in the illustrated example, such state information is stored by VF 152-1 as state information 260, which may include indices and other state information.

In the illustrated example, for the vNIC to transmit a packet, vNIC driver 124-2 stores the packet in TX buffer(s) 220 and updates a PCIe BAR of memory 144 to alert VF 152-1. VF 152-1 retrieves the packet from TX buffer(s) 220 for further processing thereby. Specifically, the packet is stored and retrieved at an index of TX buffer(s) 220 known by each of vNIC driver 124-2 and VF 152-1 based on the indices of states 250 and 260, respectively. Active DPU 150-1 then performs any required processing on the packet and transmits the packet to its destination, which may be, e.g., another VM on the same one of hosts 110 or one of VMs 122 on another one of hosts 110. In the illustrated example, for the vNIC to receive a packet, VF 152-1 stores the packet in RX buffer(s) 222 and raises an interrupt to vNIC driver 124-2. VNIC driver 124-2 retrieves the packet from RX buffer(s) 222 for further processing thereby. Specifically, the packet is stored and retrieved at an index of RX buffer(s) 222 known by each of vNIC driver 124-2 and VF 152-1 based on the indices of states 250 and 260, respectively. As illustrated in Figure 2B, the data path for a vNIC in pass-through mode is considerably shorter than that of a vNIC is emulation mode, thus allowing for a vNIC to transmit and receive traffic faster.

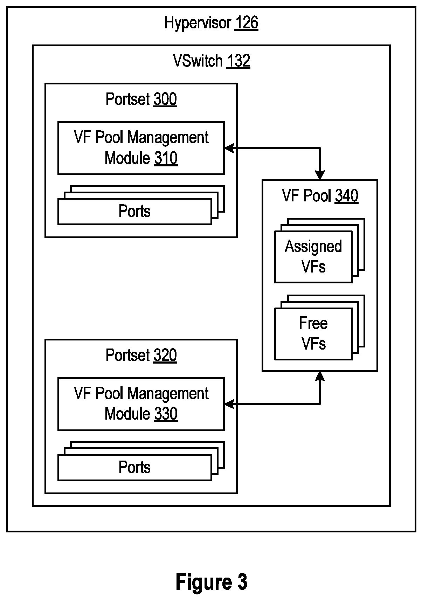

Figure 3 is a block diagram of an example configuration of vSwitch 132 of hypervisor 126. In the illustrated example, vSwitch 132 includes a plurality of portsets, including a portset 300 and a portset 320, and a VF pool 340. Portsets 300 and 320 each includes a plurality of ports, each of such ports connecting a vNIC to one of DPUs 150, e.g., via NIC driver 134. Additionally, in the illustrated example, portsets 300 and 320 include VF pool management modules 310 and 330, respectively, for managing the assignments of VFs of DPUs 150 to vNICs. VF pool 340 may include identifiers (IDs) of such VFs, including for VFs that have already been assigned to vNICs and for VFs that are currently free. For vNICs associated with the respective ones of portsets 300 and 320, VF pool management modules 310 and 330 may access VF pool 340 to manage the VFs.

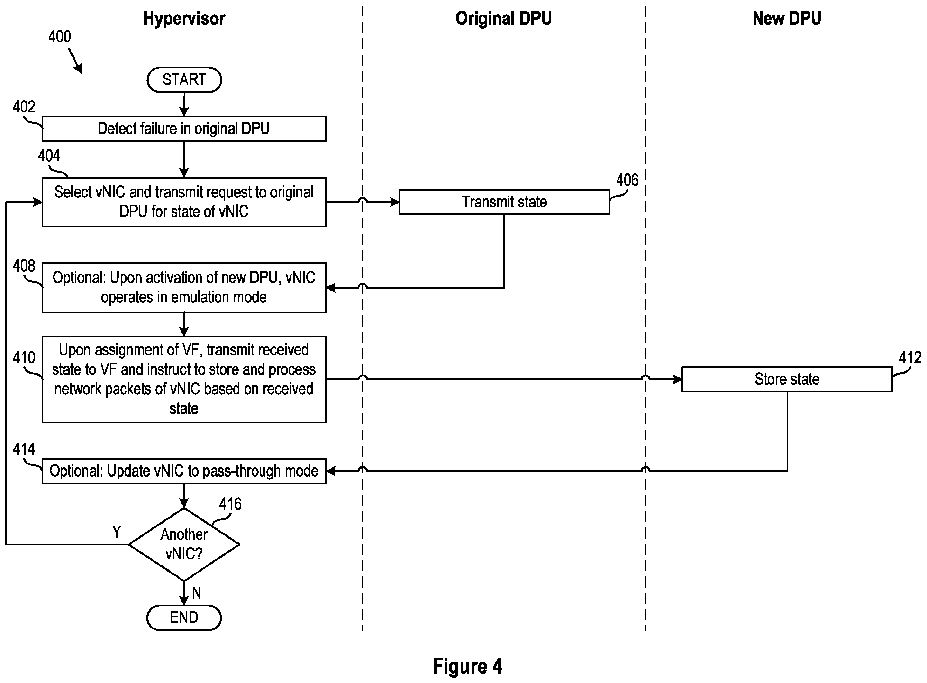

Figure 4 is a flow diagram of a method 400 performed by hypervisor 126 and two of DPUs 150 to handle a failure of one of DPUs 150 when hypervisor 126 is able to acquire states of vNICs that are in pass-through mode from the failed one of DPUs 150, according to some embodiments. In the following description, the failed one of DPUs 150 is referred to as the "original DPU," and a new one of DPUs 150 that is activated in response to the failure is referred to as the "new DPU." At step 402, hypervisor 126 detects the failure in the original DPU. Specifically, host daemon 130 receives a message from network management server 170 indicating the failure.

At step 404, in response to detecting the failure, hypervisor 126 selects a vNIC and transmits a request to the corresponding one of VFs 152 of the original DPU for state of the selected vNIC. For example, host daemon 130 may transmit a message to one of vNIC backend modules 128 indicating the failure of the original DPU, in response to which vNIC backend module 128 transmits the request to corresponding VF 152. At step 406, corresponding VF 152 of the original DPU transmits the state to hypervisor 126, e.g., to vNIC backend module 128 therein. The state may include indices required for communicating with vNIC driver 124 of the selected vNIC and any pending interrupts and error information.

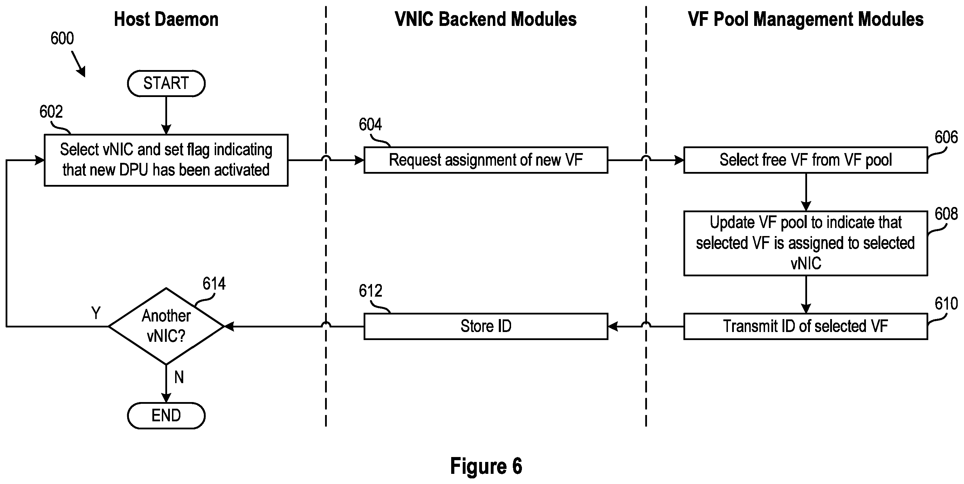

At step 408, upon activation of the new DPU for performing networking operations, as an optional step, vNIC backend module 128 begins operating in emulation mode. Step 408 enables the new DPU to continue processing traffic for the vNIC before the new DPU is ready to communicate with the vNIC in pass-through mode. At step 410, assuming the new DPU has been activated, upon a VF of the new DPU being assigned to the selected vNIC, hypervisor 126, e.g., vNIC backend module 128 therein, transmits the received state to the assigned VF. Such assignment of a VF is discussed below in conjunction with Figure 6. Hypervisor 126, e.g., vNIC backend module 128 therein, further instructs the assigned VF to store and process network packets of the vNIC based on the received state.

At step 412, the assigned VF of the new DPU stores the state. At step 414, as an optional step that is performed if step 408 has been performed, hypervisor 126 updates the vNIC to work in pass-through mode. For example, vNIC backend module 128 may update a variable indicating that the vNIC is now in pass-through mode. The assigned VF of the new DPU then performs networking operations for the selected vNIC without interruption. VNIC driver 124 and the assigned VF of the new DPU are synchronized in terms of indices, vNIC driver 124 knowing at which index a next packet will be placed in RX buffer(s) 222 by the assigned VF, and the assigned VF knowing at which index a next packet will be placed in TX buffer(s) 220 by vNIC driver 124.

Additionally, if there is a pending interrupt in the state information migrated from the original DPU, that alert is raised and handled accordingly. For example, if there is a pending interrupt to alert vNIC driver 124 about a packet placed in RX buffer(s) 222, the assigned VF raises an interrupt to alert vNIC driver 124 to retrieve the packet. Additionally, if there is any error information in the state information migrated from the original DPU, that error information is used to remediate any identified issues. At step 416, if there is another vNIC in pass-through mode that was supported by the original DPU, method 400 returns to step 404, and steps 404-414 are repeated for the next vNIC. Otherwise, if there are no more of such vNICs, method 400 ends.

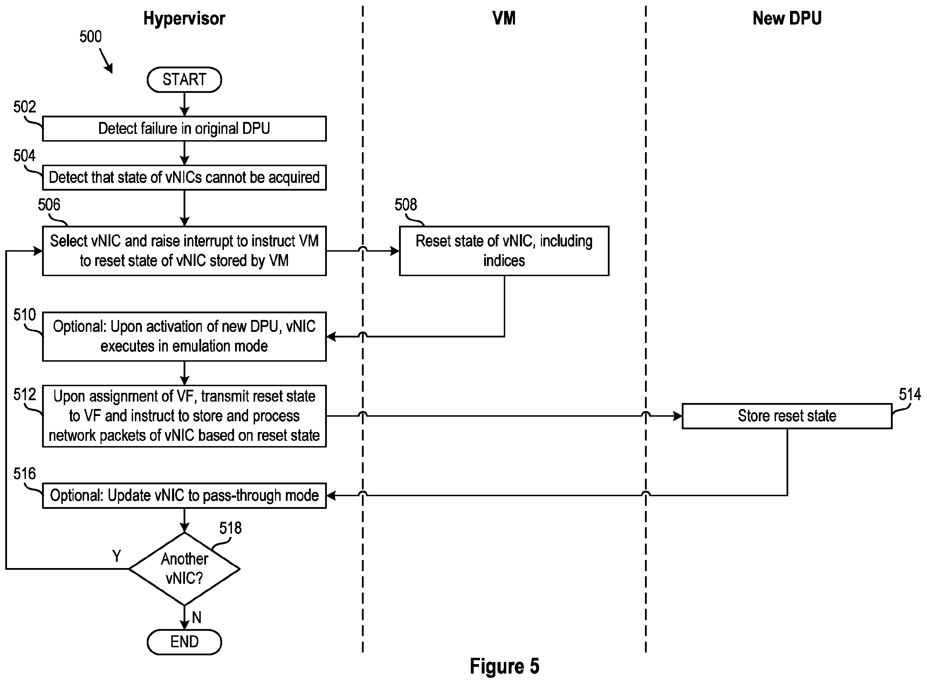

Figure 5 is a flow diagram of a method 500 performed by hypervisor 126, one of VMs 122, and a newly activated one of DPUs 150 to handle a failure of one of DPUs 150 when hypervisor 126 is unable to acquire states of vNICs that are in pass-through mode from the failed DPU, according to some embodiments. In the following description, the failed one of DPUs 150 is referred to as the "original DPU," and the new one of DPUs 150, which is activated in response to the failure, is referred to as the "new DPU." At step 502, hypervisor 126 detects the failure in the original DPU. For example, host daemon 130 may receive a message from network management server 170 indicating the failure.

At step 504, hypervisor 126 detects that states of vNICs in pass-through mode cannot be acquired from the original DPU. For example, the original DPU may be completely dead and thus unable to transmit such information to hypervisor 126. Accordingly, when hypervisor 126, e.g., vNIC backend modules 128 therein, transmits requests to corresponding VFs 152 for the states of associated vNICs, corresponding VFs 152 having processed network packets of the vNICs according to the states of the vNICs, the requests fail. For example, hypervisor 126 may receive error messages in response to the requests or may not receive responses at all. At step 506, hypervisor 126 selects a vNIC and raises an interrupt to instruct the corresponding one of VMs 122 to reset the state of the selected vNIC that is stored by the VM. For example, host daemon 130 may transmit a message to one of vNIC backend modules 128 indicating the failure of the original DPU, in response to which vNIC backend module 128 raises the interrupt to its corresponding one of vNIC drivers 124.

At step 508, vNIC driver 124 of VM 122 resets its state, which may include resetting any indices thereof to default values, and transmits those values to hypervisor 126, e.g., to vNIC backend module 128 therein, as part of vNIC activation. At step 510, upon activation of the new DPU for performing networking operations, as an optional step, the vNIC begins executing in emulation mode, which enables the new DPU to continue processing traffic for the vNIC. At step 512, assuming the new DPU has been activated, upon a VF of the new DPU being assigned to the selected vNIC, hypervisor 126, e.g., vNIC backend module 128 therein, transmits the reset state of the vNIC to the assigned VF and further instructs the assigned VF to store and process network packets of the vNIC based on the reset state of the vNIC. The assigned VF then begins performing such operations starting from the reset state (e.g., including with reset indices). It should be noted that the reset state may have been updated after step 508 based on the processing of network packets in emulation mode.

At step 514, the assigned VF of the new DPU stores the reset state. At step 516, as an optional step that is performed if step 510 has been performed, hypervisor 126 updates the vNIC to work in pass-through mode. For example, vNIC backend module 128 may update a variable indicating that the vNIC is now in pass-through mode. VNIC driver 124 and the assigned VF of the new DPU are synchronized in terms of indices, vNIC driver 124 knowing at which index a next packet will be placed in RX buffer(s) 222 by the assigned VF, and the assigned VF knowing at which index a next packet will be placed in TX buffer(s) 220 by vNIC driver 124. At step 518, if there is another vNIC in pass-through mode that was supported by the original DPU, method 500 returns to step 506, and steps 506-516 are repeated for another vNIC. Otherwise, if there are no more of such vNICs, method 500 ends.

Figure 6 is a flow diagram of an example of a method 600 performed by hypervisor 126 after a failure of one of DPUs 150, to assign VFs 152 of a new one of DPUs 150 to vNICs, according to some embodiments incorporating a host daemon 130, vNIC backend modules 128, and VF pool management modules, as discussed above. In the following description, the failed one of DPUs 150 is referred to as the "original DPU," and the new one of DPUs 150 is referred to as the "new DPU." At step 602, host daemon 130 selects a vNIC and sets a flag indicating that a new DPU has been activated. For example, host daemon 130 may call a function to set a flag in vSwitch 132, specifically a flag associated with a port of the vNIC, to indicate the activation. At step 604, vNIC backend module 128 of the selected vNIC transmits a request to an associated VF pool management module of vSwitch 132 for assignment of a new VF to the vNIC.

At step 606, the associated VF pool management module selects a VF from VF pool 340, the VF being currently marked as a free VF of the new DPU. At step 608, the VF pool management module updates VF pool 340 to indicate that the selected VF is now assigned to the selected vNIC. At step 610, the VF pool management module transmits an ID of the selected VF to vNIC backend module 128. At step 612, vNIC backend module 128 stores the ID. At step 614, if there is another vNIC in pass-through mode that was supported by the original DPU, method 600 returns to step 602, and steps 602-612 are repeated for another vNIC by host daemon 130, vNIC backend module 128 of the next vNIC, and a VF pool management module of vSwitch 132 associated with the next vNIC. Otherwise, if there are no more of such vNICs, method 600 ends.

The embodiments described herein may employ various computer-implemented operations involving data stored in computer systems. For example, these operations may require physical manipulation of physical quantities. Usually, though not necessarily, these quantities are electrical or magnetic signals that can be stored, transferred, combined, compared, or otherwise manipulated. Such manipulations are often referred to in terms such as producing, identifying, determining, or comparing. Any operations described herein that form part of one or more embodiments may be useful machine operations.

One or more embodiments of the invention also relate to a device or an apparatus for performing these operations. The apparatus may be specially constructed for required purposes, or the apparatus may be a general-purpose computer selectively activated or configured by a computer program stored in the computer. Various general-purpose machines may be used with computer programs written in accordance with the teachings herein, or it may be more convenient to construct a more specialized apparatus to perform the required operations. The embodiments described herein may also be practiced with computer system configurations including hand-held devices, microprocessor systems, microprocessor-based or programmable consumer electronics, minicomputers, mainframe computers, etc.

One or more embodiments of the present invention may be implemented as one or more computer programs or as one or more computer program modules embodied in computer-readable media. The term computer-readable medium refers to any data storage device that can store data that can thereafter be input into a computer system. Computer-readable media may be based on any existing or subsequently developed technology that embodies computer programs in a manner that enables a computer to read the programs. Examples of computer-readable media are magnetic drives, SSDs, network-attached storage (NAS) systems, read-only memory (ROM), RAM, compact disks (CDs), digital versatile disks (DVDs), magnetic tapes, and other optical and non-optical data storage devices. A computer-readable medium can also be distributed over a network-coupled computer system so that computer-readable code is stored and executed in a distributed fashion.

Although one or more embodiments of the present invention have been described in some detail for clarity of understanding, certain changes may be made within the scope of the claims. Accordingly, the described embodiments are to be considered as illustrative and not restrictive, and the scope of the claims is not to be limited to details given herein but may be modified within the scope and equivalents of the claims. In the claims, elements and steps do not imply any particular order of operation unless explicitly stated in the claims.

Virtualized systems in accordance with the various embodiments may be implemented as hosted embodiments, non-hosted embodiments, or as embodiments that blur distinctions between the two. Furthermore, various virtualization operations may be wholly or partially implemented in hardware. For example, a hardware implementation may employ a look-up table for modification of storage access requests to secure non-disk data. Many variations, additions, and improvements are possible, regardless of the degree of virtualization. The virtualization software can therefore include components of a host, console, or guest operating system (OS) that perform virtualization functions.

Boundaries between components, operations, and data stores are somewhat arbitrary, and particular operations are illustrated in the context of specific illustrative configurations. Other allocations of functionality are envisioned and may fall within the scope of the invention. In general, structures and functionalities presented as separate components in exemplary configurations may be implemented as a combined component. Similarly, structures and functionalities presented as a single component may be implemented as separate components. These and other variations, additions, and improvements may fall within the scope of the appended claims.

## Claims

1. A method of migrating states of virtual network interface controllers (vNICs) of virtual computing instances between data processing units (DPUs), the method comprising:
in response to detecting a failure in a first DPU, transmitting a request to the first DPU for a state of a first vNIC of a first virtual computing instance, wherein the state of the first vNIC includes memory locations at which network packets of the first vNIC are to be stored by one of the first vNIC and a first virtual function (VF) of the first DPU for further processing by the other; and
transmitting the state of the first vNIC, received from the first DPU in response to the request for the state of the first vNIC, to a second DPU, and instructing a second VF of the second DPU to store and process network packets of the first vNIC based on the state of the first vNIC transmitted to the second DPU.

2. The method of claim 1, further comprising:
in response to detecting that state of a second vNIC of a second virtual computing instance cannot be acquired from a third DPU in which a third VF has processed network packets of the second vNIC according to the state of the second vNIC, instructing the second virtual computing instance to reset the state of the second vNIC, transmitting the reset state of the second vNIC to a fourth DPU, and instructing a fourth VF of the fourth DPU to store and process network packets of the second vNIC based on the reset state of the second vNIC, and,
in particular, prior to instructing the second virtual computing instance to reset the state of the second vNIC, detecting that the state of the second vNIC cannot be acquired from the third DPU by transmitting a request to the third DPU for the state of the second vNIC and then receiving an error message in response to the request for the state of the second vNIC.

3. The method of claim 1 or 2, further comprising:
after detecting the failure in the first DPU, executing the first vNIC in an emulation mode as a result of which the network packets of the first vNIC pass through a virtualization software that supports execution of the first virtual computing instance.

4. The method of claim 3, further comprising:
after beginning execution of the first vNIC in the emulation mode and instructing the second VF to store and process network packets of the first vNIC, updating an execution mode of the first vNIC to a pass-through mode as a result of which the network packets of the first vNIC are transmitted directly between the first virtual computing instance and the second DPU without passing through the virtualization software.

5. The method of any of claims 1 to 4, wherein the state of the first vNIC transmitted to the second DPU further includes information about a pending interrupt to be raised with respect to the processing of network packets of the first vNIC, and/or
wherein the state of the first vNIC transmitted to the second DPU further includes information about an error encountered in the processing of network packets of the first vNIC.

6. A non-transitory computer-readable medium comprising instructions that are executable in a computer system, wherein the instructions when executed cause the computer system to carry out a method of migrating states of virtual network interface controllers (vNICs) of virtual computing instances between data processing units (DPUs), wherein the method comprises:
in response to detecting a failure in a first DPU, transmitting a request to the first DPU for a state of a first vNIC of a first virtual computing instance, wherein the state of the first vNIC includes memory locations at which network packets of the first vNIC are to be stored by one of the first vNIC and a first virtual function (VF) of the first DPU for further processing by the other; and
transmitting the state of the first vNIC, received from the first DPU in response to the request for the state of the first vNIC, to a second DPU, and instructing a second VF of the second DPU to store and process network packets of the first vNIC based on the state of the first vNIC transmitted to the second DPU.

7. The non-transitory computer-readable medium of claim 6, wherein the method further comprises:
in response to detecting that state of a second vNIC of a second virtual computing instance cannot be acquired from a third DPU in which a third VF has processed network packets of the second vNIC according to the state of the second vNIC, instructing the second virtual computing instance to reset the state of the second vNIC, transmitting the reset state of the second vNIC to a fourth DPU, and instructing a fourth VF of the fourth DPU to store and process network packets of the second vNIC based on the reset state of the second vNIC, and
in particular, prior to instructing the second virtual computing instance to reset the state of the second vNIC, detecting that the state of the second vNIC cannot be acquired from the third DPU by transmitting a request to the third DPU for the state of the second vNIC and then receiving an error message in response to the request for the state of the second vNIC.

8. The non-transitory computer-readable medium of claim 6 or 7, wherein the method further comprises:
after detecting the failure in the first DPU, executing the first vNIC in an emulation mode as a result of which the network packets of the first vNIC pass through a virtualization software that supports execution of the first virtual computing instance.

9. The non-transitory computer-readable medium of claim 8, wherein the method further comprises:
after beginning execution of the first vNIC in the emulation mode and instructing the second VF to store and process network packets of the first vNIC, updating an execution mode of the first vNIC to a pass-through mode as a result of which the network packets of the first vNIC are transmitted directly between the first virtual computing instance and the second DPU without passing through the virtualization software.

10. The non-transitory computer-readable medium of any of claims 6 to 9, wherein the state of the first vNIC transmitted to the second DPU further includes information about a pending interrupt to be raised with respect to the processing of network packets of the first vNIC, and/or
wherein the state of the first vNIC transmitted to the second DPU further includes information about an error encountered in the processing of network packets of the first vNIC.

11. A computer system comprising:
a first host computer including one or more central processing units (CPUs) and a plurality of data processing units (DPUs) including a first DPU and a second DPU, wherein a virtualization software executing on the one or more CPUs of the first host computer is configured to:
in response to detecting a failure in the first DPU, transmit a request to the first DPU for a state of a first vNIC of a first virtual computing instance, wherein the state of the first vNIC includes memory locations at which network packets of the first vNIC are to be stored by one of the first vNIC and a first virtual function (VF) of the first DPU for further processing by the other; and
transmit the state of the first vNIC, received from the first DPU in response to the request for the state of the first vNIC, to the second DPU, and instruct a second VF of the second DPU to store and process network packets of the first vNIC based on the state of the first vNIC transmitted to the second DPU.

12. The computer system of claim 11, further comprising:
a second host computer including one or more CPUs and a plurality of DPUs including a third DPU and a fourth DPU, wherein a virtualization software executing on the one or more CPUs of the second host computer is configured to:
in response to detecting that state of a second vNIC of a second virtual computing instance cannot be acquired from the third DPU in which a third VF has processed network packets of the second vNIC according to the state of the second vNIC, instruct the second virtual computing instance to reset the state of the second vNIC, transmit the reset state of the second vNIC to the fourth DPU, and instruct a fourth VF of the fourth DPU to store and process network packets of the second vNIC based on the reset state of the second vNIC, and
in particular, prior to instructing the second virtual computing instance to reset the state of the second vNIC, detect that the state of the second vNIC cannot be acquired from the third DPU by transmitting a request to the third DPU for the state of the second vNIC and then receiving an error message in response to the request for the state of the second vNIC.

13. The computer system of claim 1511 or 12, wherein the virtualization software executing on the one or more CPUs of the first host computer is further configured to:
after detecting the failure in the first DPU, execute the first vNIC in an emulation mode as a result of which the network packets of the first vNIC pass through a virtualization software that supports execution of the first virtual computing instance.

14. The computer system of any of claims 11 to 13, wherein the virtualization software executing on the one or more CPUs of the first host computer is further configured to:
after beginning execution of the first vNIC in the emulation mode and instructing the second VF to store and process network packets of the first vNIC, update an execution mode of the first vNIC to a pass-through mode as a result of which the network packets of the first vNIC are transmitted directly between the first virtual computing instance and the second DPU without passing through the virtualization software.

15. The computer system of claim 14, further comprising:
a memory device including one or more transmit (TX) buffers and one or more receive (RX) buffers, wherein the virtualization software of the first host computer is further configured to:
store packets in the one or more RX buffers to be retrieved by the first virtual computing instance; and
retrieve packets from the one or more TX buffers that were placed in the one or more TX buffers by the first virtual computing instance.
